Europäisches Patentamt

(19) European Patent Office

Office européen des brevets

(11) Veröffentlichungsnummer: **0 334 861**

**B1**

(12) **EUROPÄISCHE PATENTSCHRIFT**

(45) Veröffentlichungstag der Patentschrift: **22.08.90**

(51) Int. Cl.⁵: **F 04 D 29/60, F 16 M 5/00**

(21) Anmeldenummer: **87907595.0**

(22) Anmeldetag: **12.11.87**

(86) Internationale Anmeldenummer:
**PCT/EP87/00700**

(87) Internationale Veröffentlichungsnummer:
**WO 88/04366 16.06.88 Gazette 88/13**

(54) **GEHÄUSETRÄGER FÜR STRÖMUNGSMASCHINEN.**

(30) Priorität: **04.12.86 DE 3641478**

(43) Veröffentlichungstag der Anmeldung:
**04.10.89 Patentblatt 89/40**

(45) Bekanntmachung des Hinweises auf die
Patenterteilung:
**22.08.90 Patentblatt 90/34**

(84) Benannte Vertragsstaaten:
**AT BE CH DE FR GB IT LI LU NL SE**

(56) Entgegenhaltungen:
**DE-A-2 359 591**
**DE-B-2 905 864**
**GB-A-1 057 346**
**US-A-1 886 035**
**US-A-2 856 958**

(73) Patentinhaber: **KSB Aktiengesellschaft**
**Johann-Klein-Strasse 9**
**D-6710 Frankenthal (DE)**

(72) Erfinder: **FINK, Gerhard**
**Johann-Unger-Stra e 11**
**D-6840 Lampertheim (DE)**
Erfinder: **ALBRECHT, Werner**
**Neugasse 6**
**D-6730 Neustadt (DE)**
Erfinder: **KRAUSS, Arno**
**Ludwigshain 24**
**D-6714 Weisenheim (DE)**
Erfinder: **RIEL, Axel**
**Beindersheimer Stra e 51**
**D-6710 Frankenthal (DE)**
Erfinder: **SCHERER, Rolf**
**Friedhofstra e 18**
**D-6711 He heim (DE)**
Erfinder: **SCHMITT, Werner**
**Max-Reger-Stra e 3**
**D-6712 Bobenheim-Roxheim (DE)**
Erfinder: **STARKE, Joerg**
**Alzeyer Stra e 4**
**D-6509 Eppelsheim (DE)**

## Beschreibung

Die Erfindung betrifft eine Vorrichtung gemäß dem Oberbegriff des Hauptanspruches.

Für die Anbringung von Strömungsmaschinen an ihrem Aufstellungsort sind die unterschiedlichsten Lösungen bekannt. So zeigt die DE-A 23 59 591 einen Winkelfuß in Gußausführung, welcher aus zwei im wesentlichen U-förmigen und im Winkel von 90° zueinander angeordneten Elementen besteht. Damit erfolgt eine Befestigung auf einer Grundplatte sowie an einem einen Elektromotor aufnehmenden Zwischengehäuse. Aus der GB-A 1 886 035 ist ein auf der Pumpensaugseite befestigter einfacher Winkelfuß bekannt, welcher eine Verbindung mit der Grundplatte herstellt. Durch die den Oberbegriff bildende US-A 1 886 035 ist eine Grundplatte bekannt, an deren angeformten speziellen Halterung ein passend ausgebildetes Pumpengehäuse in einer senkrecht zur Pumpenwelle verlaufenden Ebene befestigt wird. Diese Lösungen weisen das gemeinsame Merkmal auf, daß die Gehäuse in einer senkrecht zur Pumpenwelle verlaufenden Ebene befestigt werden.

Eine hierzu völlig andere und vor allem nachgiebige Art der Gehäuseaufstellung zeigt die DE-A 29 05 864, bei der das Gehäuse in einer Art Fachwerk eingespannt ist, wobei an den Verbindungsstellen der Fachwerkstäbe Gelenke gebildet werden. Hiermit sollen durch Wärmedehnungen bedingte unzulässige Spannungen ausgeglichen und bei schweren Erschütterungen die Funktionsfähigkeit des Gehäuses gewährleistet bleiben. Aus diesem Grund sind im Bereich der Mittelachsen angeordnete Befestigungspunkte erforderlich.

Der Erfindung liegt die Aufgabe zugrunde, für Strömungsmaschinen eine wenig aufwendige Befestigungseinrichtung zu entwickeln, welche bei einfacher Ausbildung und einfacher Montagemöglichkeit ein hohes Maß an Vielseitigkeit sowie Steifigkeit besitzt. Die Lösung dieser Aufgabe erfolgt gemäß dem kennzeichnenden Teil des Hauptanspruches.

Mittels dieser Lösung steht ein Befestigungsmittel zur Verfügung, welches z. B. in einfacher Weise als Stanzteil hergestellt werden kann. Einander gegenüberliegende Aufnahmeelemente sind kräfteaufnehmend am Außendurchmesser des Gehäuses befestigt, wobei im Bereich dieser Aufnahmeelemente angeordnete Fußelemente für die Weiterleitung der aufgenommenen Kräfte sorgen. Ein mit den Aufnahme- und/oder Fußelementen verbundenes, ein- oder mehrteiliges Trägerelement, welches gleichzeitig auch mit dem Gehäuseende verbunden ist, bedingt eine außerordentlich steife Konstruktion. Auf das Gehäuse einwirkende Kräfte werden nicht nur durch die Aufnahme- und Fußelemente, sondern zusätzlich noch durch ein Trägerelement aufgenommen und in die Grundplatte geleitet. Die Verwendung eines quer zur Gehäuselängsachse verlaufenden Trägerelementes und dessen Verbindung mit dem Gehäuseende, beispielsweise im Bereich der Flanschfläche für einen Gehäuseverschluß, ermöglicht es, insbesondere quer zur Gehäuselängsachse wirkende Belastungen aufzunehmen. Verlagerungen des Wellenstumpfes werden dadurch auf ein Minimum begrenzt.

Eine Ausgestaltung der Erfindung sieht vor, daß Zentriermittel den Tragrahmen am Gehäuse positionieren. Mit Hilfe der Zentriermittel erlangt man eine gravierende Montagevereinfachung, da ein Ausrichten des Tragrahmens am Gehäuse entfällt und nach dem Anbringen desselben nur noch die Verbindungselemente angeschraubt werden müssen. Bei den Zentriermitteln kann es sich um Zentrierstifte, -bohrungen, -flächen oder dergleichen handeln, die mit entsprechenden Gegenflächen am Strömungsmaschinengehäuse bzw. an dem daran anzubringenden Lagerträger, Antriebsmotor oder dergleichen zusammenwirken. Dies ermöglicht beispielsweise im Wartungsfall an einer eingebauten Strömungsmaschine eine sehr einfache und zuverlässige Montage eines Lagerträgers. Denn der Tragrahmen bildet somit einen Bestandteil der Referenzpunkte bzw. Referenzflächen, auf den die Strömungsmaschine oder andere Aggregatteile bezogen sind.

Eine weitere Ausgestaltung sieht vor, daß am Gehäuseende und/oder einem das Gehäuseende verschließenden Bauteil angebrachte Zentriermittel an am Trägerelement angebrachten Gegenflächen anliegen. So kann beispielsweise ein am Gehäuseende vorgesehener Lagerträger oder Dichtflansch mit Zentrierstiften versehen sein, die in entsprechende Zentrierbohrungen des Trägerelementes hineinragen. Bei der Montage genügt ein einfaches Aufschieben, um so eine genaue Fixierung des Tragrahmens sicherzustellen.

Nach einer anderen Ausgestaltung der Erfindung ist das Trägerelement mit Öffnungen zur Aufnahme von Befestigungsmitteln versehen. Ist das Gehäuseende flanschförmig ausgebildet und wird z. B. durch einen Gehäusedeckel oder angeflanschtes Blockaggregat verschlossen, so kann mittels des Trägerelementes und der darin angebrachten Öffnungen der Tragrahmen in einfacher Weise durch die den Gehäuseverschluß haltenden Befestigungsmittel am Gehäuse befestigt werden.

Noch eine andere Ausgestaltung der Erfindung sieht vor, daß Aufnahme- und Fußelemente einteilig ausgebildet und mit einem oder mehreren Trägerelementen verbunden sind. Im Gegensatz zu einer einteiligen Bauart, bei der beispielsweise die Form des Tragrahmens aus einer Platte ausgestanzt wird und durch Biegevorgänge ihre Form erhält, zeichnet sich diese Ausgestaltung durch eine erweiterte Vielseitigkeit aus. Hierbei können die beiderseits der Gehäuselängsachse angebrachten Aufnahme- und Fußelemente jeweils einteilig ausgebildet und mittels Laschen oder dergleichen mit einem Trägerelement verbunden sein. In vorteilhafter Weise eignet sich eine Punktverschweißung für die Einzelteilverbindung. Für Gehäuse ungleicher Außendurchmesser, aber mit genormten Befestigungsbohrungen für die Anbringung auf einem Fundament, können die Aufnahme- und Fußelemente auch zweiteilig ausgeführt sein. Somit läßt sich durch einfache Kombination vorgefertigter Fußelemente mit unterschiedlichen, am Gehäuse anliegenden Aufnahmeflächen eine Anpassung an verschiedene Gehäusegrößen einer Baureihe erreichen. So kann aber auch das am Gehäuse anliegende Aufnahmeelement mit dem Trägerelement einstückig ausgebildet sein und das die Verbindung mit einer Grundplatte sicherstellende Fußelement ein eigenständiges Bauteil sein.

Und noch eine andere Ausgestaltung ist gekennzeichnet durch ein mehrteiliges, mit einem Gehäuseende kraft- und/oder formschlüssig verbundenes Trägerelement. Bei einem steifem Gehäuse kann somit ein Gehäuseflansch zum Bestandteil eines Trägers gemacht werden, indem an den Aufnahme- und/oder Fußelementen angebrachte Trägerelemente eine Verbindung mit dem Gehäuse herstellen. Die Verbindung zwischen einander gegenüberliegenden Fußelementen stellen dann die Trägerelemente sowie ein dazwischenliegender Flanschabschnitt des Gehäuseendes her. Zu diesem Zweck können an den Einzelteilen winkelförmige Zungen angebracht sein, mit denen eine Befestigung erfolgt.

Ausführungsbeispiele der Erfindung sind in den Zeichnungen dargestellt und werden im folgenden näher beschrieben. Es zeigen die

Fig. 1 eine einstufige Strömungsmaschine, die

Fig. 2 eine perspektivische Ansicht des Tragrahmens und die

Fig. 3 und 4 Vorderansichten mit unterschiedlichem Zusammenbau der Einzelteile.

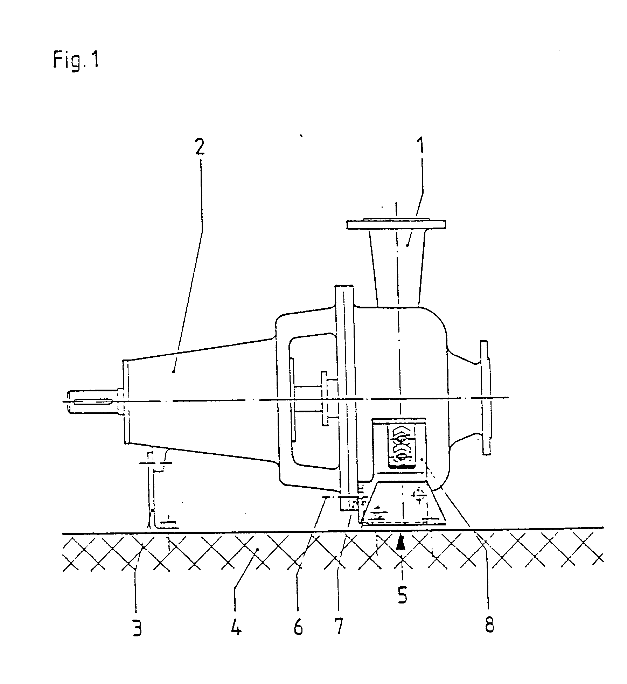

In dem Ausführungsbeispiel der Fig. 1 ist eine Strömungsmaschine (1) dargestellt, beispielsweise eine Kreiselpumpe oder Radialturbine, die mit einem das Gehäuse verschließenden Lagerträger (2) versehen ist. Im Bereich des Lagerträgers (2) stellt ein Stützfuß (3) eine Verbindung mit einem Fundament (4) her. Im Bereich der Strömungsmaschine ist der erfindungsgemäße Tragrahmen (5) angebracht, der mit dem Fundament (4) und der Strömungsmaschine (1) verbunden ist. Diejenigen Schrauben (6), die die Verbindung zwischen Lagerträger und Strömungsmaschine sichern, verbinden hier auch gleichzeitig den Tragrahmen (5) mit dem Gehäuseende (7) der Strömungsmaschine (1). An der Außenwand der Strömungsmaschine erfolgt eine weitere Befestigung durch Aufnahmeelemente (8) und bekannte Befestigungsmittel.

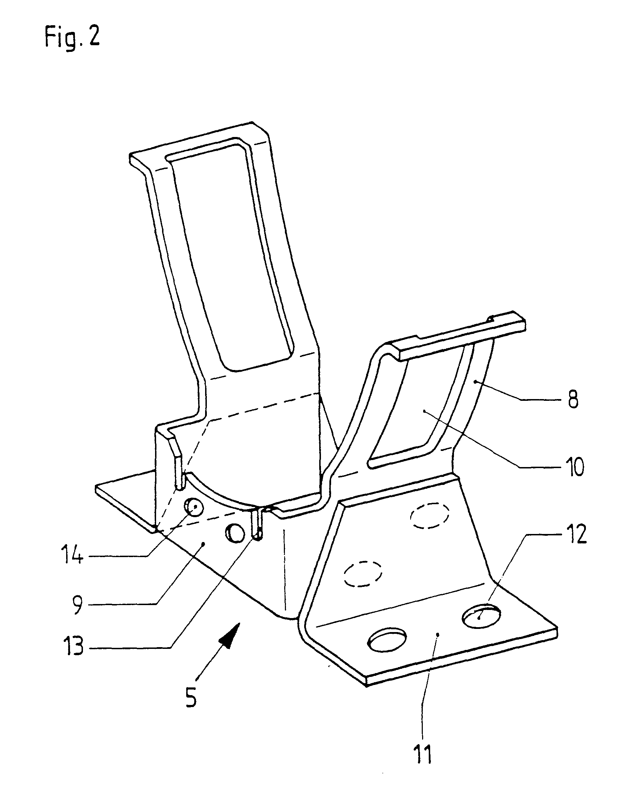

Die Fig. 2 ist eine perspektivische Darstellung eines Ausführungsbeispiels mit einem dreiteilig ausgebildeten Tragrahmen (5). Er besteht aus einem Trägerelement (9), welches U-förmig gebogen und im Bereich der Schenkel mit am Gehäuse der Strömungsmaschine anliegenden Aufnahmeelementen (8) versehen ist. Die Aufnahmeelemente weisen Öffnungen (10) auf, mit deren Hilfe sowie entsprechenden Befestigungsmitteln eine Verbindung mit der Strömungsmaschine erstellt wird. An dem Trägerelement (9) bzw. den Aufnahmeelementen (8) sind als Einzelteile ausgebildete Fußelemente (11) angebracht, z. B. mittels Schrauben, Schweißen oder dergleichen. Die winkelförmig ausgebildeten Fußelemente (11) weisen hier Bohrungen (12) zur Befestigung auf einer Grundplatte, einem Fundament oder entsprechendem Aufstellort auf.

Die an der Außenseite des Trägerelementes (9) angebrachten Fußelemente können auch an den Innenseiten befestigt werden, wodurch eine einfache Anpassung an unterschiedliche Lochabstände möglich wird.

Die im Trägerelement (9) angebrachten Öffnungen (13) dienen zum Durchstecken von Schrauben (6), die den Zusammenhalt zwischen der Strömungsmaschine (1) und daran angebrachtem Lagerträger, Blockmotor, Generator oder dergleichen sicherstellen sowie das Trägerelement (9) des Tragrahmens (5) mit der Strömungsmaschine verbinden. Die hier im Trägerelement (9) angebrachten Bohrungen sind Bestandteil von Zentriermitteln (14), indem am Gehäuse angebrachte — hier nicht gezeigte — Stifte in diese Bohrungen hineinragen. Somit kann in einfachster Weise eine Zentrierung zwischen den zu fügenden Teilen sichergestellt werden.

Es ist auch ohne weiteres möglich, das Trägerelement (9) mit den Fußelementen (11) einstükkig auszubilden bzw. den gesamten Tragrahmen einstückig auszubilden.

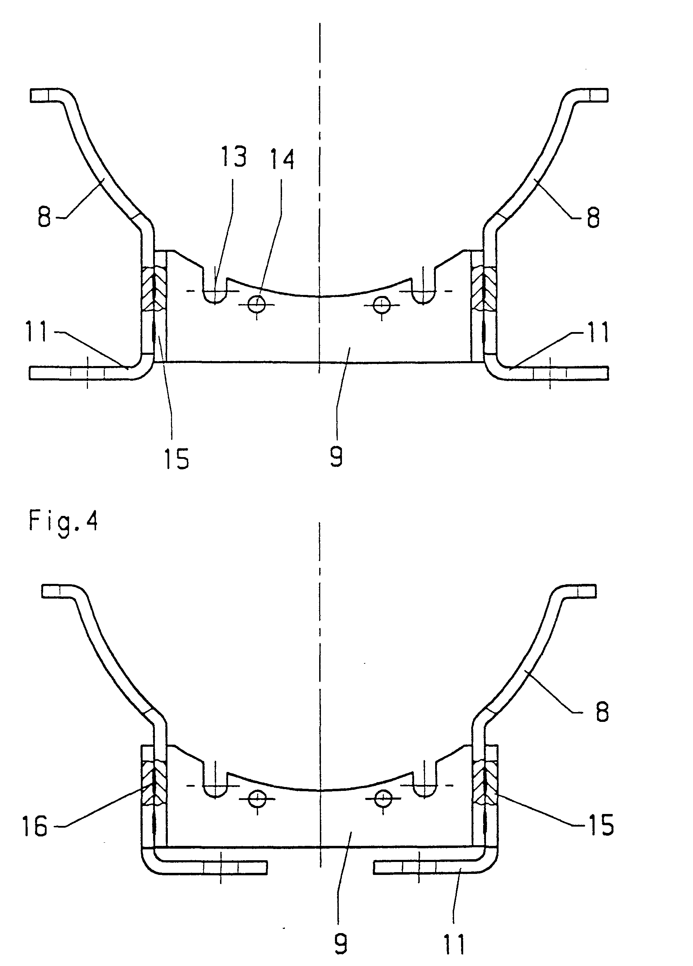

Die Fig. 3 zeigt ein anderes Ausführungsbeispiel, bei dem je ein Aufnahmeelement (8) und Fußelement (11) als ein einstückiges Bauteil gestaltet und außen an Schenkeln (15) des Trägerelementes (9) angebracht sind.

Bei der in Fig. 4 gezeigten Variante sind an einem U-förmig gebogenen Trägerelement (9) die Schenkeln (15) mit nach innen abgebogenen Fußelementen (11) versehen. Als Einzelteile ausgebildete Aufnahmeelemente (8) sind mittels Punktschweißungen (16) innen an den Schenkeln (15) angebracht.

Durch entsprechende Kombinationen der einzelnen Teile kann der Tragrahmen für die unterschiedlichsten Größen der zu befestigenden Strömungsmaschinen Verwendung finden.

**Patentansprüche**

1. Vorrichtung zur Anbringung eines Gehäuses einer Strömungsmaschine an einem Aufstellort, einem Fundament, einer Grundplatte oder dgl., wobei mit der einen Bestandteil des Aufstellortes bildenden Vorrichtung eine Verbindung mit einer antriebsseitigen Gehäusestirnseite des Strömungsmaschinengehäuses erfolgt, dadurch gekennzeichnet, daß die Vorrichtung als eigenständiger, in sich starrer, ein- oder mehrteiliger Tragrahmen (5) ausgebildet ist, daß der Tragrahmen (5) aus an der Gehäusestirnseite anbringbarem Trägerelement oder Trägerelementen (9), am Gehäuseumfang anbringbaren Aufnahmeelementen (8) und im Bereich der Aufnahmeelemente (8) angeordneten sowie mit dem Aufstellort verbindbaren Fußelementen (11) besteht und daß Befestigungsmittel den Tragrahmen (5) mit der Strömungsmaschine und dem Aufstellort sowie Teile des Tragrahmens verbinden.

2. Vorrichtung nach Anspruch 1, dadurch gekennzeichnet, daß Zentriermittel den Tragrahmen (5) am Gehäuse (1) positionieren.

3. Vorrichtung nach den Ansprüchen 1 und 2, dadurch gekennzeichnet, daß am Gehäuseende (7) und/oder einem das Gehäuseende (7) verschließenden Bauteil (2) angebrachte Zentriermittel an am Trägerelement (9) angebrachten Gegenflächen (14) anliegen.

4. Vorrichtung nach den Ansprüchen 1 bis 3, dadurch gekennzeichnet, daß das Trägerelement mit Öffnungen (13) zur Aufnahme von Befestigungsmitteln (6) versehen ist.

5. Vorrichtung nach den Ansprüchen 1 bis 4, dadurch gekennzeichnet, daß Flansch- und Fußelemente (8, 11) einteilig ausgebildet und mit einem oder mehreren Trägerelementen (9) verbunden sind.

6. Vorrichtung nach einem oder mehreren der Ansprüche 1 bis 5, gekennzeichnet durch ein mehrteiliges, mit einem Gehäuseende kraft- und/oder formschlüssig verbundenes Trägerelement (9).

**Revendications**

1. Dispositif pour la pose d'un boîtier d'une turbomachine à un emplacement, une fondation, une plaque de base ou autre, dans lequel une liaison est effectuée avec le dispositif formant une partie de l'emplacement avec une face frontale du boîtier, côté entraînement, de la turbomachine caractérisé en ce que le dispositif a la forme d'un cadre porteur (5) indépendant, rigide, en une ou plusieurs pièces, en ce que le cadre porteur (5) comprend un ou des éléments porteurs (9) montable(s) sur la face frontale du boîtier, des éléments de logement (8) montables sur la circonférence du boîtier ainsi que des éléments de pied (11) placés dans la zone des éléments de logement (8) et pouvant être reliés à l'emplacement et en ce que des moyens de fixation relient le cadre porteur (5) avec la turbomachine et l'emplacement ainsi que des pièces du cadre porteur.

2. Dispositif selon la revendication 1 caractérisé en ce que des moyens de centrage positionnent le cadre porteur (5) au boîtier (1).

3. Dispositif selon les revendications 1 et 2 caractérisé en ce des moyens de centrage placés sur l'extrêmité du boîtier (7) et/ou sur une pièce (2) fermant l'extrêmité du boîtier (7) sont posés sur des contre-surfaces (14) sur l'élément porteur (9).

4. Dispositif selon les revendications 1 à 3 caractérisé en ce que l'élément porteur est muni d'ouvertures (13) pour le logement de moyens de fixation (6).

5. Dispositif selon les revendications 1 à 4 caractérisé en ce que des éléments de bride ou de pied (8, 11) ont une forme monopièce et sont reliés avec un ou plusieurs éléments porteurs (9).

6. Dispositif selon une ou plusieurs des revendications 1 à 5 caractérisé par un élément porteur (9) en plusieurs pièces relié à l'extrêmité du boîtier et entraîné par la force et/ou par la forme.

**Claims**

1. Device to mount a housing of a single- or multi-stage turbo-machine at a place of installation, where the pedestal elements provided on the housing are connected with foundations, base plates or the like, characterised by that, that a one-piece or multi-piece carrier frame (5) is provided in the region of one end (7) of the housing, that the carrier frame (5) consists of one or more carrier components (9), flange components (8) and pedestals (11), that fastening means join the flange components (8) with the housing and the pedestals (11) with the installation place, and that they [the fastening means] or the carrier components (9) are connected with one end (7) of the housing as well as with the flange and/or pedestals.

2. Device according to claim 1, characterised by that, that the carrier frame (5) is positioned on the housing (1) by centralising means.

3. Device according to claims 1 and 2, characterised by that, that centralising means provided on the end (7) of the housing and/or on one of the components (2) closing off the end (7) of the housing fit against counter surfaces (14) provided on the carrier component (9).

4. Device according to claims 1 to 3, characterised by that, that the carrier component is provided with openings (13) to accommodate the fastening means (6).

5. Device according to claims 1 to 4, characterised by that, that flange elements and pedestals (8, 11) are constructed integral and are connected with one or more carrier elements (9).

6. Device according to one or more of the claims 1 to 5, characterised by a multi-piece carrier component (9), which is connected with an end of the housing affected by force and/or shape.

Fig. 1

Fig. 2

Fig.4